# EUROPEAN PATENT SPECIFICATION

(11) **EP 1 756 330 B1**
(45) Date of publication and mention of the grant of the patent: **13.08.2008**
(21) Application number: 05746324.2
(22) Date of filing: 01.06.2005
(51) Int. Cl.: C23C 24/10, F28F 13/18, B23K 35/28

(54) **METHOD FOR REDUCING METAL OXIDE POWDER AND ATTACHING IT TO A HEAT TRANSFER SURFACE AND THE HEAT TRANSFER SURFACE**
VERFAHREN ZUM REDUZIEREN VON METALLOXIDPULVER UND ANBRINGEN DAVON AUF EINER WÄRMEÜBERTRAGUNGSOBERFLÄCHE UND WÄRMEÜBERTRAGUNGSOBERFLÄCHE
PROCÉDÉ DE RÉDUCTION D'UNE POUDRE D'OXYDE MÉTALLIQUE ET SA FIXATION SUR UNE SURFACE DE TRANSFERT THERMIQUE, ET SURFACE DE TRANSFERT THERMIQUE

(30) Priority: 03.06.2004 FI 20040759
(43) Date of publication of application: 28.02.2007
(73) Proprietor: Luvata Oy, 02100 Espoo (FI)
(72) Inventor: RISSANEN, Petri, FI-28200 Pori (FI); LAAKSONEN, Olli, FI-28260 Harjunpää (FI)
(74) Representative: Reyier, Ann-Mari
(86) International application number: PCT/FI2005/000250
(87) International publication number: WO 2005/118913

(56) References cited:
- EP-B1- 0 744 586
- WO-A1-20/04018147
- US-A- 3 821 018
- US-A- 3 832 242
- US-A- 5 378 294
- US-A1- 2003 001 000
- US-B1- 6 342 106
- PATENT ABSTRACTS OF JAPAN vol. 011, no. 047 13 February 1987 & JP 61 210 186 A (NIPPON LIGHT METAL CO LTD) 18 September 1986

## Description

### FIELD OF THE INVENTION

The purpose of the method developed is to form a porous surface layer on top of a heat transfer surface, and to make it attach itself firmly to the surface below it at a temperature and time suitable for industrial production. The heat transfer surface is copper or a copper alloy, preferably oxygen-free copper or deoxidised high phosphorous copper. The powder forming the porous surface is fine-grained copper oxide powder, which is reduced to metallic copper on the heat transfer surface during heat treatment. In the method according to the invention, a brazing solder is brought to the heat transfer surface to bind forming copper powder to its substrate. The invention also relates to the heat transfer surface of copper or copper alloy, onto which the porous layer is formed from copper powder, which is manufactured by reducing copper oxide powder and attached to the heat transfer surface by means of brazing solder.

### BACKGROUND OF THE INVENTION

The aim in the development of heat exchangers has always been to get the largest possible heat transfer capacity for the heat transfer surface. A smooth surface can be considered the first stage of development when thinking of a tube. The second generation of development is surfaces that are grooved and ridged in different ways, where the pattern may be both on the inner and outer surface. In recent years a third generation of heat transfer surfaces has been developed, namely porous surfaces. A porous surface is formed by attaining a fine-grained powder on the heat transfer surface, fixed to the heat exchange surface in various ways. The powder forms a porous layer on the surface of the tube or other heat exchanger, which allows an increase in heat transfer capacity.

The increase in heat transfer capacity is based on the fact that with a porous surface, boiling begins at a lower temperature than normal. When nuclear boiling starts at temperatures lower than normal, the temperature difference between the heat transfer surface and the liquid remains smaller. For example, when using water as the liquid the temperature must not reach a hundred degrees, because in that case it is no longer a question of the intended nuclear boiling in the porous surface, but the whole liquid boils instead.

Heat transfer surfaces that may use a porous surface are for instance heat exchanger tubes, of which a porous layer may be formed on both the inner and outer surface. In addition, other devices used for heat transfer include heat sink, heat spreader, heat pipe and vapour chamber devices, boiling surfaces for cooling electronic components as well as solar panels, cooling elements, car radiators and other coolers such as casting moulds and casting coolers.

US patent publications 3,821,018 and 4,064,914 describe the formation of a porous metallic layer on a copper surface. A metallic layer is formed from copper powder, steel powder or copper alloy powder, bonding metal alloy powder and an inert liquid binder. The bonding metal alloy powder comprises either a powder with 90.5-93 wt % copper and 7-9.5 wt % phosphorous, a powder with 25-95 wt % antimony and the rest copper, or a powder with 56% silver, 22% copper, 17% zinc and 5% tin. The grain size of both the powder forming the porous layer and the bonding metal alloy powder is between 32-500 µm and the amount of bonding metal alloy powder is 10-30% of the total amount of powder. The surface onto which the porous layer is formed is coated first with a binder. After that a combined layer of copper powder and bonding metal alloy powder is spread on top of the binder. The piece is heated in non-oxidising conditions first at a temperature below 538°C to vaporise the binder. The temperature is raised at a rate of approximately 200°C/h. In the second heating stage, the temperature is increased quickly to a range between 732-843°C. At the temperature in question the bonding metal alloy powder melts and brazes the entire powder mass to its base material.

JP patent application 61228294 presents a method for the formation of a porous layer on the inner surface of a heating pipe. First the binder is spread onto the pipe. After this, the porous layer is formed of metal particles with a grain size of the magnitude of 100 - 300 µm. As fluxing agent tin chloride may be used for example, which is sprayed on top of the powder layer and dried, so that the binder is removed. If several layers are desired, the procedures are repeated several times. Finally the powder is fixed to the surface of the pipe by means of a braze. The braze is tin or a tin-lead alloy and is heated to 300-350°C.

JP patent application 2175881 describes the formation of a layer of powder-like substance on the inner surface of a heat transfer tube. The tube is copper or aluminium. By means of a suitable binder or fluxing agent an integral layer of a mixture of two powders is formed on the inner surface of the tube. One of the powders is a metal with a lower melting point such as tin, and the other has a higher melting point such as copper. The particle size of the powders is 0.01 - 3 mm. In addition, a spiral groove is formed on the inner surface of the tube. The tube is heated to the melting point of the powder with the lower melting point, whereby the powder with the higher melting point is also fixed to the surface of the tube. Simultaneously, a stable porous layer is formed on the surface of the tube.

CN patent application 1449880 presents a low-temperature sintering process for forming a porous layer on the surface of a pipe. According to this patent, glue is brushed onto the surface of the pipe, which is then sprayed with a copper-tin powder alloy and the component is then transferred to a furnace, where it is treated in a shielding gas. In the first stage the pipe is kept at a temperature of 400-500 °C for 5-30 minutes, after which the temperature is raised quickly to 670-700 °C, at which temperature the pipe is kept for 60-90 min. The tin content of the powder alloy is 9 -13 wt%.

In the above-mentioned US patent publications 3,821,018 and 4,064,914, a method is presented, in which fine-grained powder is fixed to a heat transfer surface using a binder and bonding metal alloy powder. The binder is removed slowly by heating, after which the temperature is raised to a minimum of 732°C, so that the bonding metal alloy powder melts and brazes the powder to the heat transfer surface. Thus this is a case of brazing, where the heating temperature required is high and the heating time is long for implementation on industrial scale. In other methods of the prior art, tin or a tin alloy is used, which help fix the powder to the heat transfer surface as a soft soldered joint. In all the publications described above copper powder or copper alloy powder are used to form the porous surface.

### PURPOSE OF THE INVENTION

The purpose of the method now developed is to form on top of a heat transfer surface a porous layer, which is advantageous, and which can be fixed to the surface below it at a temperature and in a time applicable for industrial production.

### SUMMARY OF THE INVENTION

The invention relates to a method for manufacturing a strongly adhesive porous surface layer on a heat transfer surface. The powder forming the porous surface is fine-grained copper oxide powder, which is reduced to metallic copper by means of heat treatment. The copper oxide powder may be copper (I) oxide or copper (II) oxide. The heat transfer surface is copper or copper alloy, preferably oxygen-free or deoxidised high phosphorous copper. In the method brazing solder is brought to the heat transfer surface and after this or at the same time the copper oxide powder that will form the actual porous surface is brought to the surface. Reduced copper particles are brazed to each other and to the heat transfer surface acting as substrate by annealing in order to form a porous heat transfer surface.

The method also relates a heat transfer surface of copper or copper alloy, onto which a porous heat transfer surface has been formed by reducing copper oxide powder into copper powder and brazing the reduced powder particles to each other and to the heat transfer surface acting as substrate by annealing with Ni-Sn-P-Cu-containing brazing solder.

The essential features of the invention will be made apparent in the appended claims.

Either monovalent or divalent copper oxides may be used as the copper oxide powder. One advantage of copper oxide powder is that its price is considerably lower than the price of copper powder. In one embodiment of the invention, the copper oxide powder used is cuprous oxide powder, which is formed during a hydrometallurgical fabrication of copper. The use of copper oxide powder is also advantageous due to the shortness of the process. In addition, the surface of copper oxide granules is very porous, which is why the nucleation of gas bubbles in the microscopic pores is easy and why boiling and heat transfer are effective.

Both Cu₂O and CuO may be used in the manufacture of a porous coating. The reduction of both oxides can be done at the same temperature. When reducing CuO the amount of gas required for reduction is double and the reduction time slightly longer than when using Cu₂O.

The heat transfer surface onto which the porous layer is fixed is preferably of oxygen-free copper or deoxidised high phosphorous copper, with a phosphorous content of the order of 150-400 ppm, i.e. the heat transfer capacity of the material is already naturally very high. It is described in the prior art how heat exchanger pipes and many other devices are considered to be heat transfer surfaces. The method according to our invention for manufacturing a permanent porous surface as well as the heat transfer surface according to the invention may be used in the manufacture of these devices. In order to obtain a porous surface fine-grained copper oxide powder is brought to the heat transfer surface.

Heat treatment of the heat transfer surface is performed in reductive conditions, so that the oxide powder brought on top of the surface is reduced to metallic copper. The reductive gas used may be generally used reductive gases or gas mixtures such as pure hydrogen or a hydrogen mixture, carbon monoxide or cracked ammonia.

The particle size distribution of the powder is preferably fairly narrow and the powder particle shape preferably round or rounded. When the particle size distribution is narrow, the surface formed is very porous i.e. there remain plenty of cavities, in which the heat transfer fluid starts to boil at low temperatures. The particle size distribution may be for instance a narrow range of between 35 - 250 µm. One preferred particle size range is 35-100 µm. If the particle size distribution is large, the structure may be formed too densely and the benefits of a porous surface lost.

The heat transfer surface may be treated with a binder or a binder may be mixed into the metal oxide powder to be used in preparing a coating, as described in the prior art, but this is not necessary. If a binder is used, its removal takes place by annealing according to known techniques.

As brazing solder some known brazing solder used in bonding copper may be used. It is possible to use known brazing solders for instance, silver-containing brazing solders, if it is advantageous for other reasons. In one preferred embodiment of the invention, a brazing solder is used which is a metal alloy, which in addition to copper, contains nickel, tin and phosphorous. The contents of the brazing alloy are preferably in the following range: 0.8-5.2 weight % Ni, 0-27.4 weight % Sn, 2.2-10.9 weight % P with the remainder copper. One braze composition that has proved advantageous is as follows: 3.9-4.5 weight % Ni, 14.6-16.6 weight % Sn, 5.0-5.5 weight % P with the remainder copper, and its melting point is preferably between 590-605°C. The amount of solder to be used is 1-50 weight % of the total amount of powder fed to the heat transfer surface.

The brazing powder may be brought to the heat transfer surface in many different ways. According to one method of the invention, the brazing powder is mixed into the copper oxide powder. This method is possible particularly if it is desired to use a separate binder. In another embodiment, the brazing layer is made on the heat transfer surface before the copper oxide powder is put on it. The brazing may be placed on the heat transfer surface for example on top of a binder before the copper oxide powder is put on the surface. In a third method, the heat transfer surface may be first immersed in molten braze and then the copper oxide powder put on the surface. The brazing powder may also be brought to the heat transfer surface by means of thermal spraying or by brushing or spraying the brazing powder mixed into a binder using gas pressure.

The copper oxide powder that forms the actual porous surface may also be fed to the heat transfer surface in several different ways. One way is to mix a binder, brazing powder and copper oxide powder together and spray the mixture onto the heat transfer surface. According to one embodiment the brazing is brought to the surface of the material to be treated separately and the copper oxide powder is sprayed on top of the brazing layer. The thickness of the powder layer is preferably in the range of 35 - 500 µm and advantageously 35 - 300 µm.

A strong joint is obtained between the powder particles and the heat transfer surface by means of brazing solder. In this case the component to be treated is held first at a temperature of 400-500 °C, so that the copper oxide is reduced and any binder is removed by evaporation. After that, the component is briefly, for 1-10 minutes, at a maximum temperature of 725°C, preferably in the range of 650-700°C. In brazing, the brazing material may be molten or mushy. In this case the furnace used may be for example a batch furnace or a strand annealing furnace, through which the heat transfer component to be treated is routed. When the component is at the temperature in question only momentarily, it means a clear energy saving in comparison to the known technology. At the same time, momentary heating in practice means that the furnace to be used may be relatively short, reducing investment costs.

According to one embodiment of the invention, the reduction time may be shortened by performing reduction at a high temperature, e.g. at the brazing temperature, in which case reduction is carried out at a temperature range of 400 - 725°C, preferably between 500 - 650°C.

The invention also relates to a heat transfer surface of copper or copper alloy, onto which a porous surface of copper powder is formed, where said powder is fabricated from copper oxide powder by reduction. The powder may be CuO or Cu₂O. The powder is attached to the heat transfer surface with some known brazing solder. Preferably the brazing solder is a metal alloy, including nickel, tin and phosphorous in addition to copper. The contents of the brazing alloy are preferably in the following range: 0.8-5.2 weight % Ni, 0-27.4 weight % Sn, 2.2-10.9 weight % P with the remainder copper. One braze composition that has proved advantageous is as follows: 3.9-4.5 weight % Ni, 14.6-16.6 weight % Sn, 5.0-5.5 weight % P with the remainder copper. The amount of solder to be used is 1-50 weight % of the total amount of powder fed to the heat transfer surface.

In addition to heat exchanger tubes, the heat transfer surface may be formed on other devices used for heat transfer, which include heat sink, heat spreader, heat pipe and vapour chamber devices, and boiling surfaces for cooling electronic components as well as solar panels, cooling elements, car radiators and other coolers such as various casting moulds and casting coolers.

### LIST OF DRAWINGS

Figure 1 is a SEM picture of a coating in the fabrication of which copper powder reduced from copper oxide powder was used,
Figure 2 is a cross-section of a porous coating, in the fabrication of which copper powder reduced from copper oxide powder was used, and
Figure 3 is a SEM picture of a brazed copper particle reduced from copper oxide.

### EXAMPLES

### Example 1

Deoxidised high phosphorous copper strip (Cu-DHP) was used as the heat transfer surface. The cuprous oxide powder was hydrometallurgically prepared powder and the brazing solder used was a powder with the following composition: 3.9 -4.5 weight % Ni, 14.6 -16.6 weight % Sn, 5.0-5.5 weight % P with the remainder copper. Both powders were mixed with a commercial organic binder, whereby a powder paste was formed. The composition of the paste in percentage by weight was 77% cuprous oxide powder, 18% binder and 5% brazing powder.

The paste was sprayed onto the surface of the copper strip. The thickness of the sprayed coating layer was approximately 100 µm. The strip was conveyed through a resistance furnace acting as a drying and brazing furnace at a rate of 10 cm/min. The temperature of the binder drying and evaporation furnace was approximately 300°C and that of the reduction-brazing furnace about 620°C. Nitrogen atmosphere was used as shielding gas, which included some hydrogen to prevent the oxidation of the component.

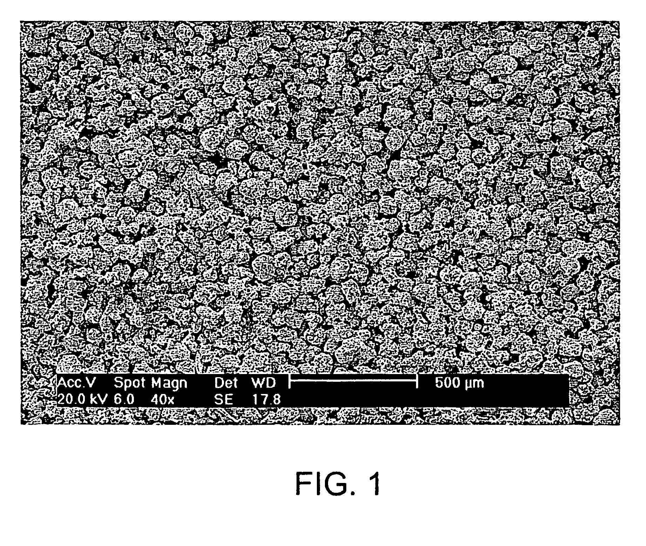

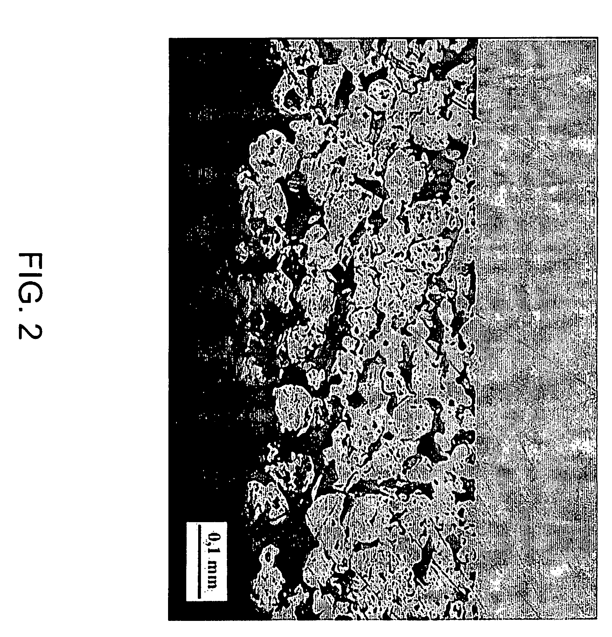

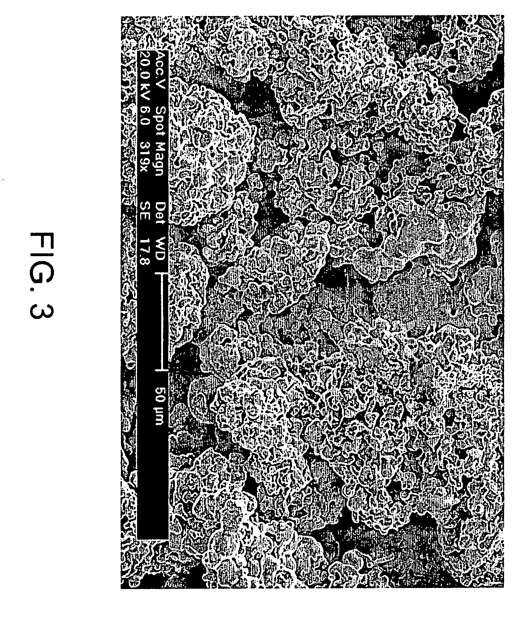

After brazing, the strip was taken for inspection, where it was found that the powder particles had reduce to metallic copper and adhered tightly to the surface of the strip and to each other. The strip could also be bent without dislodging any powder from the surface. The porosity of the surface and the surface area were large and numerous channels extending from the surface of the strip to the surface of the powder layer had formed in the structure, as can be seen in Figs. 1 and 2. Figures 1 and 3 are SEM pictures (SEM = Scanning Electron Microscopy) and Figure 2 a microscopy picture. The granules that had reduced from copper oxide to copper were made up of smaller particles, between which there were pores and channels extending inside the particles, as shown in Figure 3.

After the formation of the porous surface, the strip was welded into a tube so that the porous surface formed the inner surface of the tube. The welding was very successful despite the porous surface. The porosity of the finished inner surface coating of the heat transfer tube was around 40 volume %.

## Claims

1. A method for forming a strongly adhesive porous surface layer on a heat transfer surface of copper or copper alloy, which porous surface layer is attached to the heat transfer surface by means of annealing with brazing solder alloy, **characterised in that** the porous layer is formed of copper oxide powder, wherein the heat transfer surface is conveyed for heat treatment, where the oxide powder is reduced to metallic copper and copper powder is brazed to the heat transfer surface.

2. A method according to claim 1, **characterised in that** the copper oxide powder is cuprous oxide.

3. A method according to claim 1, **characterised in that** the copper oxide powder is copper (II) oxide.

4. A method according to any of claims 1-3, **characterised in that** the reduction of the copper oxide powder is performed in the temperature range of 400 - 725°C.

5. A method according to any of claims 1-3, **characterised in that** the reduction of the copper oxide powder is performed in the temperature range of 500-650 °C.

6. A method according to any of claims 1-5, **characterised in that** the particle size distribution of the copper oxide powder forming the porous surface is narrow and selected from the range of 35 - 250 µm.

7. A method according to claim 6, **characterised in that** the particle size distribution of the copper oxide powder forming the porous surface is 35-100 µm.

8. A method according to any of claims 1-7, **characterised in that** the composition of the brazing solder alloy is in the range of 0.8 - 5.2 weight % Ni, 0 -27.4 weight % Sn, 2.2 -10.9 weight % P, with the remainder being copper.

9. A method according to claim 8, **characterised in that** the composition of the brazing solder alloy is in the range of 3.9 - 4.5 weight % Ni, 14.6-16.6 weight % Sn, 5.0-5.5 weight % P. with the remainder being copper.

10. A method according to any of claims 1--9, **characterised in that** the melting point of the brazing solder alloy is 590-605°C.

11. A method according to any of claims 1-10, **characterised in that** the reduction of the copper oxide powder is performed in the temperature range of 400 - 500 °C and the brazing in the range of 600 -725°C.

12. A method according to any of claims 1-7 or 11, **characterised in that** the brazing solder alloy is a silver-containing solder alloy.

13. A method according to any of claims 1-12, **characterised in that** the brazing solder alloy is brought to the heat transfer surface in powder form together with the copper oxide powder.

14. A method according to any of claims 1-13, **characterised in that** a paste is made of the brazing solder alloy powder, the copper oxide powder and the binder, which is sprayed or brushed onto the heat transfer surface.

15. A method according to any of claims 1-14, **characterised in that** the brazing solder alloy is brought to the heat transfer surface by dipping the heat transfer surface in molten solder.

16. A method according to any of claims 1-15, **characterised in that** the brazing solder alloy is brought to the heat transfer surface by means of thermal spraying.

17. A method according to any of claims 1-16, **characterised in that** a paste is made of the brazing solder alloy powder and the binder, which is sprayed or brushed onto the heat transfer surface.

18. A method according to any of claims 1-16, **characterised in that** the heat transfer surface is kept at the brazing temperature for 1 -10 min.

19. A method according to any of claims 1-18, **characterised in that** the heat transfer surface is formed on the surface of copper or copper alloy strip.

20. A method according to claim 19, **characterised in that** a heat exchanger tube is manufactured from copper or copper alloy strip by welding, and that its inner and/or outer surfaces form a heat transfer surface.

21. A heat transfer surface of copper or copper alloy, onto which a strongly adhesive porous surface layer is formed and brazed to the heat transfer surface by annealing with brazing solder alloy, **characterised in that** the porous layer comprises copper oxide power brazed to the heat transfer surface by annealing with brazing solder and reduced to metallic copper powder in accordance with the method in claim 1.

22. A heat transfer surface according to claim 21, **characterised in that** the porous layer of the heat transfer surface has been manufactured from cuprous oxide.

23. A heat transfer surface according to claim 21, **characterised in that** the porous layer of the heat transfer surface has been manufactured from copper (II) oxide.

24. A heat transfer surface according to any of claims 21-23, **characterised in that** the reduction of the copper oxide powder has been performed in the temperature range of 400-500 °C.

25. A heat transfer surface according to claim 21, **characterised in that** the composition of the brazing solder alloy used to form the porous surface is in the range of 0.8-5.2 weight % Ni, 0 - 27.4 weight % Sn, 2.2 -10.9 weight % P with the remainder being copper.

26. A heat transfer surface according to claim 25, **characterised in that** the composition of the brazing solder alloy used to form the porous surface is in the range of 3.9 - 4.5 weight % Ni, 14.6 - 16.6 weight % Sn, 5.0 - 5.5 weight % P with the remainder being copper.

27. A heat transfer surface according to claim 25, **characterised in that** the brazing solder alloy used to form the porous surface is silver-containing.

28. A heat transfer surface according to any of claims 21-27, **characterised in that** the amount of brazing solder alloy used to form the porous surface is 1-50 weight % of the total amount of powder used to form the porous surface.

29. A heat transfer surface according to any of claims 21-28, **characterised in that** the porous surface has been formed on the surface of copper or copper alloy strip.

30. A heat transfer surface according to claim 29, **characterised in that** the heat transfer surface is provided on a heat exchanger tube manufactured from a copper or copper alloy strip by welding.

31. A heat transfer surface according to any of claims 21-29, **characterised in that** the porous heat transfer surface has been formed on any of the equipment group that includes heat sink, heat spreader, heat pipe and vapour chamber equipment, boiling surfaces for cooling electronic components, solar panels, cooling elements, car radiators and other coolers such as various casting moulds and casting coolers.

## Patentansprüche

1. Verfahren zum Bilden einer stark adhäsiven porösen Oberflächenschicht auf einer Wärmeübertragungsfläche aus Kupfer oder einer Kupferlegierung, welche poröse Oberflächenschicht auf die Wärmeübertragungsfläche mittels Ausglühens mit einer Hartlöt-Legierung festgelegt wird,
**dadurch gekennzeichnet, dass** die poröse Schicht aus einem Kupferoxid-Pulver gebildet ist, wobei die Wärmeübertragungsfläche einer Wärmebehandlung zugeführt wird, bei der das Oxid-Pulver zu metallischem Kupfer reduziert wird und das Kupferpulver mit der Wärmeübertragungsfläche verlötet wird.

2. Verfahren nach Anspruch 1,
**dadurch gekennzeichnet, dass** das Kupferoxid-Pulver Kupfer (I)-Oxid ist.

3. Verfahren nach Anspruch 1,
**dadurch gekennzeichnet, dass** das Kupferoxid-Pulver Kupfer (II)-Oxid ist.

4. Verfahren nach einem der Ansprüche 1 bis 3,
**dadurch gekennzeichnet, dass** die Reduktion des Kupfer-Oxid-Pulvers in dem Temperaturbereich von 400 - 725° C ausgeführt wird.

5. Verfahren nach einem der Ansprüche 1 bis 3,
**dadurch gekennzeichnet, dass** die Reduktion des Kupfer-Oxid-Pulvers in dem Temperaturbereich von 500 - 650° C ausgeführt wird.

6. Verfahren nach einem der Ansprüche 1 bis 5,
**dadurch gekennzeichnet, dass** die Partikelgrößen-Verteilung des die poröse Oberfläche bildenden Kupfer-Oxid-Pulvers schmal ist und in dem Bereich von 35 - 250 µm gewählt ist.

7. Verfahren nach Anspruch 6,
**dadurch gekennzeichnet, dass** die Partikelgrößen-Verteilung des die poröse Oberfläche bildenden Kupfer-Oxid-Pulvers 35 - 100 µm ist.

8. Verfahren nach einem der Ansprüche 1 bis 7,
**dadurch gekennzeichnet, dass** die Zusammensetzung der Hartlöt-Legierung in dem Bereich von 0,8 - 5,2 Gewichtsprozent Ni; 0 - 27,4 Gewichtsprozent Sn; 2,2 - 10,9 Gewichtsprozent P und einem Restanteil an Kupfer ist.

9. Verfahren nach Anspruch 8,
**dadurch gekennzeichnet, dass** die Zusammensetzung der Hartlöt-Legierung in dem Bereich von 3,9 - 4,5 Gewichtsprozent Ni; 14,6 - 16,6 Gewichtsprozent Sn; 5,0 - 5,5 Gewichtsprozent P und einem Restanteil an Kupfer ist.

10. Verfahren nach einem der Ansprüche 1 bis 9,
**dadurch gekennzeichnet, dass** der Schmelzpunkt der Hartlöt-Legierung 590 - 605° C ist.

11. Verfahren nach einem der Ansprüche 1 bis 10,
**dadurch gekennzeichnet, dass** die Reduktion des Kupferoxid-Pulvers in dem Temperaturbereich von 400 - 500° C und das Löten in dem Bereich von 600 - 725°C ausgeführt wird.

12. Verfahren nach einem der Ansprüche 1 bis 7 oder 11,
**dadurch gekennzeichnet, dass** die Hartlöt-Legierung eine Silber enthaltende Lötlegierung ist.

13. Verfahren nach einem der Ansprüche 1 bis 12,
**dadurch gekennzeichnet, dass** die Hartlöt-Legierung an die Wärmeübertragungsfläche in Pulverform zusammen mit dem Kupferoxid-Pulver gebracht wird.

14. Verfahren nach einem der Ansprüche 1 bis 13,
**dadurch gekennzeichnet, dass** eine pastöse Masse aus dem Pulver der Hartlöt-Legierung, dem Kupferoxid-Pulver und dem Bindemittel gefertigt wird, die auf die Wärmeübertragungsfläche gesprüht oder aufgestrichen wird.

15. Verfahren nach einem der Ansprüche 1 bis 14,
**dadurch gekennzeichnet, dass** die Hartlöt-Legierung auf die Wänneübertragungsfläche durch Eintauchen der Wärmeübertragungsfläche in geschmolzenes Lötmittel gebracht wird.

16. Verfahren nach einem der Ansprüche 1 bis 15,
**dadurch gekennzeichnet, dass** die Hartlöt-Legierung auf die Wärmeübertragungsfläche mit Hilfe eines thermischen Spray-Verfahrens gebracht wird.

17. Verfahren nach einem der Ansprüche 1 bis 16,
**dadurch gekennzeichnet, dass** eine pastöse Masse aus dem Pulver der Hartlöt-Legierung und dem Bindemittel gefertigt wird, die auf die Wärmeübertragungsfläche gesprüht oder aufgestrichen wird.

18. Verfahren nach einem der Ansprüche 1 bis 16,
**dadurch gekennzeichnet, dass** die Wärmeübertragungsfläche auf der Löt-Temperatur für 1 - 10 Minuten gehalten wird.

19. Verfahren nach einem der Ansprüche 1 bis 18,
**dadurch gekennzeichnet, dass** die Wärmeübertragungsfläche auf der Fläche des Kupfer- oder Kupferlegierungsstreifens gebildet wird.

20. Verfahren nach Anspruch 19,
**dadurch gekennzeichnet, dass** ein Wärme-Übertragungsrohr aus einem Kupfer- oder Kupferlegierungsstreifen mittels Schweißverfahrens hergestellt wird, und dass dessen Innen-und/oder Außenflächen eine Wärmeübertragungsfläche bilden.

21. Wärmeübertragungsfläche aus Kupfer oder einer Kupferlegierung, auf der eine stark adhäsive poröse Oberflächenschicht gebildet und mittels Ausglühens mit einer Hartlöt-Legierung auf die Wärmeübertragungsfläche gelötet ist,
**dadurch gekennzeichnet, dass** die poröse Schicht ein auf die Wärmeübertragungsfläche mittels Ausglühens mit Hilfe eines Hartlötmittels gelötetes Kupferoxid-Pulver umfasst, das zu metallischem Kupferpulver gemäß dem Verfahren nach Anspruch 1 reduziert ist.

22. Wärmeübertragungsfläche gemäß Anspruch 21,
**dadurch gekennzeichnet, dass** die poröse Schicht der Wärmeübertragungsfläche aus Kupfer (I)-Oxid hergestellt ist.

23. Wärmeübertragungsfläche gemäß Anspruch 21,
**dadurch gekennzeichnet, dass** die poröse Schicht der Wärmeübertragungsfläche aus Kupfer (II)-Oxid gefertigt ist.

24. Wärmeübertragungsfläche gemäß einem der Ansprüche 21 bis 23,
**dadurch gekennzeichnet, dass** die Reduktion des Kupferoxid-Pulvers in dem Temperaturbereich von 400 - 500° C ausgeführt wurde.

25. Wärmeübertragungsfläche gemäß Anspruch 21,
**dadurch gekennzeichnet, dass** die Zusammensetzung der zur Bildung der porösen Oberfläche verwendeten Hartlöt-Legierung in dem Bereich von 0,8 - 5,2 Gewichtsprozent Ni; 0 - 27,4 Gewichtsprozent Sn; 2,2 - 10,9 Gewichtsprozent P und dem Restanteil an Kupfer ist.

26. Wärmeübertragungsfläche gemäß Anspruch 25,
**dadurch gekennzeichnet, dass** die Zusammensetzung der zur Bildung der porösen Oberfläche verwendeten Hartlöt-Legierung in dem Bereich von 3,9 - 4,5 Gewichtsprozent Ni; 14,6 - 16,6 Gewichtsprozent Sn; 5,0-5,5 Gewichtsprozent P und dem Restanteil an Kupfer ist.

27. Wärmeübertragungsfläche gemäß Anspruch 25,
**dadurch gekennzeichnet, dass** die zur Bildung der porösen Oberfläche verwendete Hartlot-Legierung Silber enthält.

28. Wärmeübertragungsfläche nach einem der Ansprüche 21 bis 27,
**dadurch gekennzeichnet, dass** der Anteil an zur Bildung der porösen Fläche gebildeten Hartlöt-Legierung 1 - 50 Gewichtsprozent des Gesamtanteils des zur Bildung der porösen Fläche verwendeten Pulvers ist.

29. Wärmeübertragungsfläche nach einem der Ansprüche 21 bis 28,
**dadurch gekennzeichnet, dass** die poröse Fläche auf der Oberfläche des Kupfer- oder Kupferlegierungsstreifens gebildet ist.

30. Wärmeübertragungsfläche nach Anspruch 29,
**dadurch gekennzeichnet, dass** die Wärmeübertragungsfläche auf einem Wärme-Austausch-Rohr vorgesehen ist, das aus einem Kupfer- oder Kupferlegierungsstreifen mittels Schweißverfahrens hergestellt ist.

31. Wänneübertragungsfläche nach einem der Ansprüche 21 bis 29,
**dadurch gekennzeichnet, dass** die poröse Wärmeübertragungsfläche auf einem beliebigen Objekt umfassend die Gruppe einschließlich eines Kühlkörpers, Wärmeschildes, Wärmeverteilers, Wärmeübertragungs-Rohres, einer Dampfkammer, Siedeflächen zum Kühlen elektronischer Komponenten, Solarpaneels, Kühlelementes, KFZ-Klimaanlage und anderer Kühler gebildet ist, wie beispielsweise verschiedene Gießformen und Gußverfahren-Kühler.

## Revendications

1. Procédé de formation d'une couche de surface poreuse fortement adhésive sur une surface de transfert thermique en cuivre ou alliage de cuivre, laquelle couche de surface poreuse est fixée à la surface de transfert thermique par recuit avec un alliage de brasage tendre, **caractérisé en ce que** la couche poreuse est formée de poudre d'oxyde de cuivre, dans lequel la surface de transfert thermique est acheminée pour le traitement thermique, durant lequel la poudre d'oxyde est réduite à du cuivre métallique et la poudre de cuivre est brasée sur la surface de transfert thermique.

2. Procédé selon la revendication 1, **caractérisé en ce que** la poudre d'oxyde de cuivre est de l'oxyde cuivreux.

3. Procédé selon la revendication 1, **caractérisé en ce que** la poudre d'oxyde de cuivre est de l'oxyde de cuivre (II).

4. Procédé selon l'une quelconque des revendications 1 à 3, **caractérisé en ce que** la réduction de la poudre d'oxyde de cuivre est effectuée dans la plage de température de 400-725 °C.

5. Procédé selon l'une quelconque des revendications 1 à 3, **caractérisé en ce que** la réduction de la poudre d'oxyde de cuivre est effectuée dans la plage de température de 500-650 °C.

6. Procédé selon l'une quelconque des revendications 1 à 5, **caractérisé en ce que** la granulométrie de la poudre d'oxyde de cuivre formant la surface porteuse est étroite et choisie dans la plage de 35-250 µm.

7. Procédé selon la revendication 6, **caractérisé en ce que** la granulométrie de la poudre d'oxyde de cuivre formant le surface poreuse est de 35-1.00 µm.

8. Procédé selon l'une quelconque des revendications 1 à 7, **caractérisé en ce que** la composition de l'alliage de brasage tendre est dans la plage de 0,8 à 5,2 % en poids de Ni, 0 à 27,4 % en poids de Sn, 2,2 à 10,9 % en poids de P, le reste étant du cuivre.

9. Procédé selon la revendication 8, **caractérisé en ce que** la composition de l'alliage de brasage tendre est dans la plage de 3,9 à 4,5 % en poids de Ni, 14,6 à 16,6 % en poids de Sn, 5,0 à 5,5 % en poids de P, le reste étant du cuivre.

10. Procédé selon l'une quelconque des revendications 1 à 9, **caractérisé en ce que** le point de fusion de l'alliage de brasage tendre est de 590 à 605 °C.

11. Procédé selon l'une quelconque des revendications 1 à 10, **caractérisé en ce que** la réduction de la poudre d'oxyde de cuivre est effectuée dans la plage de température de 400-500 °C et le brasage dans la plage de 600-725 °C.

12. Procédé selon l'une quelconque des revendications 1 à 7 ou 11, **caractérisé en ce que** l'alliage de brasage tendre est un alliage de soudure contenant de l'argent.

13. Procédé selon l'une quelconque des revendications 1 à 12, **caractérisé en ce que** l'alliage de brasage tendre est apporté sur la surface de transfert thermique sous forme de poudre conjointement avec la poudre d'oxyde de cuivre.

14. Procédé selon l'une quelconque des revendications 1 à 13, **caractérisé en ce qu'**une pâte, constituée de la poudre d'alliage de brasage tendre, de la poudre d'oxyde de cuivre et du liant, est appliquée par pulvérisation ou au pinceau sur la surface de transfert thermique.

15. Procédé selon l'une quelconque des revendications 1 à 14, **caractérisé en ce que** l'alliage de brasage tendre est apporté sur la surface de transfert thermique en plongeant la surface de transfert thermique dans de la brasure fondue.

16. Procédé selon l'une quelconque des revendications 1 à 15, **caractérisé en ce que** l'alliage de brasage tendre est apporté sur la surface de transfert thermique au moyen d'une pulvérisation thermique.

17. Procédé selon l'une quelconque des revendications 1 à 16, **caractérisé en ce qu'**une pâte, constituée de la poudre d'alliage de brasage tendre et du liant, est appliquée par pulvérisation ou au pinceau sur la surface de transfert thermique.

18. Procédé selon l'une quelconque des revendications 1 à 16, **caractérisé en ce que** la surface de transfert thermique est maintenue à la température de brasage pendant 1 à 10 minutes.

19. Procédé selon l'une quelconque des revendications 1 à 18, **caractérisé en ce que** la surface de transfert thermique est formée sur la bande de cuivre ou d'alliage de cuivre.

20. Procédé selon la revendication 19, **caractérisé en ce qu'**un tube échangeur thermique est fabriqué à partir d'une bande de cuivre ou d'alliage de cuivre par soudure, et **en ce que** ses surfaces internes et/ou externes forment une surface de transfert thermique.

21. Surface de transfert thermique de cuivre ou d'alliage de cuivre, sur laquelle une couche de surface poreuse fortement adhésive est formée et brasée sur la surface de transfert thermique par recuit avec un alliage de brasage tendre, **caractérisée en ce que** la couche poreuse comprend une poudre d'oxyde de cuivre brasée sur la surface de transfert thermique par recuit avec le brasage tendre et réduite en poudre de cuivre métallique selon le procédé de la revendication 1.

22. Surface de transfert thermique selon la revendication 21, **caractérisée en ce que** la couche poreuse de la surface de transfert thermique a été fabriquée à partir d'oxyde cuivreux.

23. Surface de transfert thermique selon la revendication 21, **caractérisée en ce que** la couche poreuse de la surface de transfert thermique a été fabriquée à partir d'oxyde de cuivre (II).

24. Surface de transfert thermique selon l'une quelconque des revendications 21 à 23, **caractérisée en ce que** la réduction de la poudre d'oxyde de cuivre a été réalisée dans la plage de température de 400-500 °C.

25. Surface de transfert thermique selon la revendication 21, **caractérisée en ce que** la composition de l'alliage de brasage tendre utilisée pour former la surface poreuse est dans la plage de 0,8 à 5,2 % en poids de Ni, 0 à 27,4 % en poids de Sn, 2,2 à 10,9 % en poids de P, le reste étant du cuivre.

26. Surface de transfert thermique selon la revendication 25, **caractérisée en ce que** la composition de l'alliage de brasage tendre utilisée pour former la surface poreuse est dans la plage de 3,9 à 4,5 % en poids de Ni, 14,6 à 16,6 % en poids de Sn, 5,0 à 5,5 % en poids de P, le reste étant du cuivre.

27. Surface de transfert thermique selon la revendication 25, **caractérisée en ce que** l'alliage de brasage tendre contient de l'argent.

28. Surface de transfert thermique selon l'une quelconque des revendications 21 à 27, **caractérisée en ce que** la quantité d'alliage de brasage tendre utilisée pour former la surface poreuse est de 1 à 50 % en poids de la quantité totale de poudre utilisée pour former la surface poreuse.

29. Surface de transfert thermique selon l'une quelconque des revendications 21 à 28, **caractérisée en ce que** la surface poreuse a été formée sur la surface de la bande de cuivre ou d'alliage de cuivre.

30. Surface de transfert thermique selon la revendication 29, **caractérisée en ce que** la surface de transfert thermique se trouve sur un tube échangeur thermique fabriqué à partir d'une bande de cuivre ou d'alliage de cuivre par soudure.

31. Surface de transfert thermique selon l'une quelconque des revendications 21 à 29, **caractérisée en ce que** la surface de transfert thermique poreuse a été formée sur l'un quelconque des éléments du groupe d'équipements comprenant puits de chaleur, répartiteur de chaleur, caloduc et équipement de chambre de vapeur, surfaces bouillantes pour refroidir les composants électroniques, panneaux solaires, éléments de refroidissement, radiateurs de voiture et autres refroidisseurs tels que divers refroidisseurs de moules et de coulée.
